# EUROPEAN PATENT APPLICATION

(11) **EP 3 171 060 A1**
(43) Date of publication of application: **24.05.2017**
(21) Application number: 15003339.7
(22) Date of filing: 21.11.2015
(51) Int. Cl.: F16K 15/14, A01K 63/04

(54) **NON-RETURN VALVE FOR GAS INTO LIQUID APPLICATIONS**

(71) Applicant: Linde Aktiengesellschaft, 80331 München (DE)
(72) Inventor: Glomset, Kenneth, 6020 Alesund (NO); Dullstein, Stefan, 85375 Neufahrn (DE); Hellebust, Thomas Loevold, 6050 Valderoey (NO); Aakernes, John Bertil, 6010 Aalesund (NO)
(74) Representative: Gellner, Bernd

(57) **Abstract**

The invention relates to valve (1) for discharging a gas (G) and for preventing a backflow of a liquid (L) into the valve (1), wherein the valve (1) comprises: a valve body (10) surrounding a channel (40) of the valve (1), wherein the valve body (10) further comprises at least one inlet (21) for passing gas (G) into said channel (40) and an outlet (31) for discharging said gas out of the valve (1). According to the invention, the valve body (10) comprises a circumferential groove (32) on an outside (10a) of the valve body (10), wherein said outlet (32) is arranged in said groove (32), and wherein the valve (1) comprises an elastically deformable annular sealing (33) that is arranged in said groove (32) such that when gas (G) is passed through said at least one inlet (21) into said channel (40) and the pressure of the gas (G) inside said channel (40) exceeds a threshold, the sealing (33) is pushed away from said outlet (31) by said gas (G) so that said gas (G) is discharged through said outlet (31) out of the valve (1) and such that when said pressure is below said threshold said sealing (33) closes said outlet (31) so that liquid (L) cannot flow back through said outlet (31) into the valve (1).

## Description

The present invention relates to a valve, also denoted non return valve, according to claim 1.

Such a valve for discharging a gas, preferably oxygen, into a liquid and for preventing a back-flow of the liquid into the valve, usually comprises a valve body defining a channel of the valve body, wherein the valve body further comprises at least one inlet fluidly connected to the channel for passing said gas into said channel of the valve and an outlet fluidly connected to said channel for discharging said gas out of the valve. Here, fluidly connected means that a flow connection is established between the components being fluidly connected so that a fluid (e.g. a gas and/or liquid) can flow from one component to the other component or vice versa.

Particularly when using oxygenation systems for dissolving gas in water which have pressurized water, back-flow of water into the oxygen supply line has to be prevented. In these cases normal non-return valves which are available on the market are used. They are then installed in the oxygen supply line outside the water, typically as part of the oxygen dosing system.

By doing so, water can still be pushed into the oxygen supply line, thus potentially leaving organic material in the oxygen supply line. This is the case in any kind of water application where a gas is introduced into a liquid.

Based on the above, the problem underlying the present invention is to prevent the liquid (e.g. water) to flush back into the gas supply line (e.g. oxygen supply line), particularly upon dosing gas.

This problem is solved by a valve having the features of claim 1. Preferred embodiments are stated in the corresponding sub claims or are described herein.

According to claim 1, the valve body comprises a circumferential groove on a lateral outside of the valve body, wherein said outlet is arranged in said groove, and wherein the valve comprises an elastically deformable annular sealing (e.g. in the form of an O-ring) that is arranged in said groove such that when gas is passed through said at least one inlet into said channel and the pressure of the gas inside said channel exceeds a certain threshold, the sealing is pushed away from said outlet by said gas so that said gas is discharged through said outlet out of the valve and such that when said pressure is below said threshold said sealing closes said outlet so that liquid cannot flow back through said outlet into the channel of the valve body.

Here, particularly, the respective groove (as well as the fact that the respective sealing is elastically deformable) ensures that the respective sealing returns to its initial position where it covers the outlet in the respective groove when the channel of the valve is not pressurized with the gas.

According to an embodiment of the present invention, the valve body comprises a plurality of preferably parallel circumferential grooves on said outside of the valve body as well as a plurality of outlets being fluidly connected to said channel, wherein at least one outlet is arranged in each groove, and wherein the valve comprises a plurality of elastically deformable annular sealings, wherein each sealing is arranged in an associated groove such that when gas is passed through said at least one inlet into said channel and the pressure of the gas inside said channel exceeds a certain threshold each sealing is lifted away from the respective at least one outlet by said gas so that said gas is discharged through said outlets out of the valve and such that when said pressure is below said threshold each sealing tightly butts against the outside of the valve body in the respective groove and therefore close the respective outlet so that liquid cannot flow back through said outlets into the channel of the valve body.

Further, a plurality of outlets may be arranged in each groove, wherein, in the respective groove, the outlets are arranged one after the other in a peripheral direction of the valve body, wherein the outlets may be equidistantly spaced apart from each other in the respective groove. Thus, the respective sealing covers all outlets in a groove and thus prevents back-flow of liquid through the outlets into the valve. When the channel is properly pressurized with the gas, the respective sealing is lifted away from the outlets in the respective groove so that gas can be discharged out of the channel/valve through the outlets.

Further, according to an embodiment of the present invention, said channel of the valve extends along a longitudinal axis of the valve body, wherein the channel may have a cylindrical shape, for instance.

Further, according to an embodiment of the present invention, said grooves and/or sealings are arranged coaxially with respect to the longitudinal axis. Further, said grooves and/or sealings may be spaced equidistantly in the direction of the longitudinal axis.

Finally, according to a further aspect of the present invention as claimed in claim 5, the valve according to the invention can be used as an injection device (e.g. nozzle) for injecting a gas, preferably oxygen, directly into a liquid (e.g. water). Here, the valve may form an end of a gas (e.g. oxygen) supply path via which said gas is injected into a liquid (e.g. water).

According to further embodiments of the valve and use according to the invention, besides oxygen also other gases may be discharged into a liquid (particularly water) using the valve according to the invention, like N₂, CO₂ etc.

Advantageously, the valve according to the invention can be used in a wide variety of applications where gas is injected into a liquid (particularly water) both as an injection device and as a none-return valve.

In the following, further features, advantages and embodiments of the present invention are described with reference to the Figures, wherein
- Fig. 1: shows a cross sectional view of a valve according to the invention;
- Fig. 2: shows a lateral view of the valve shown in Fig. 1;

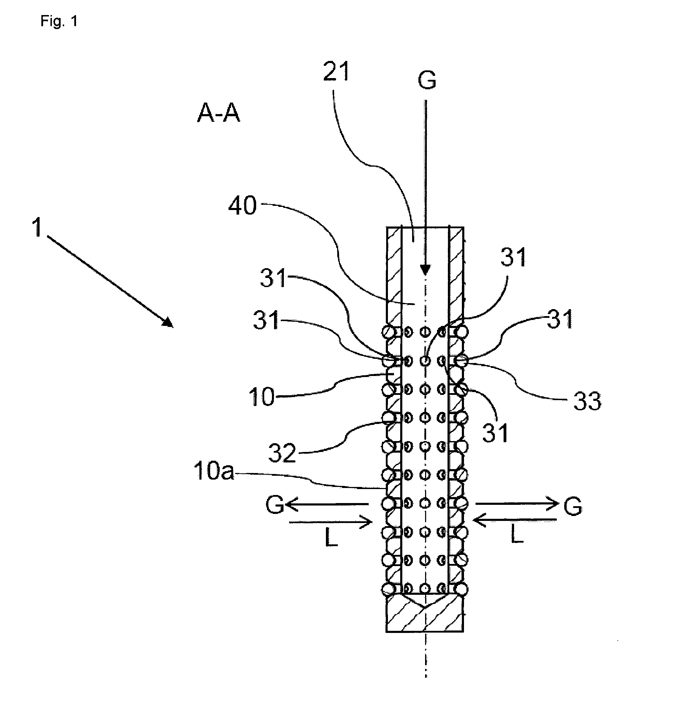

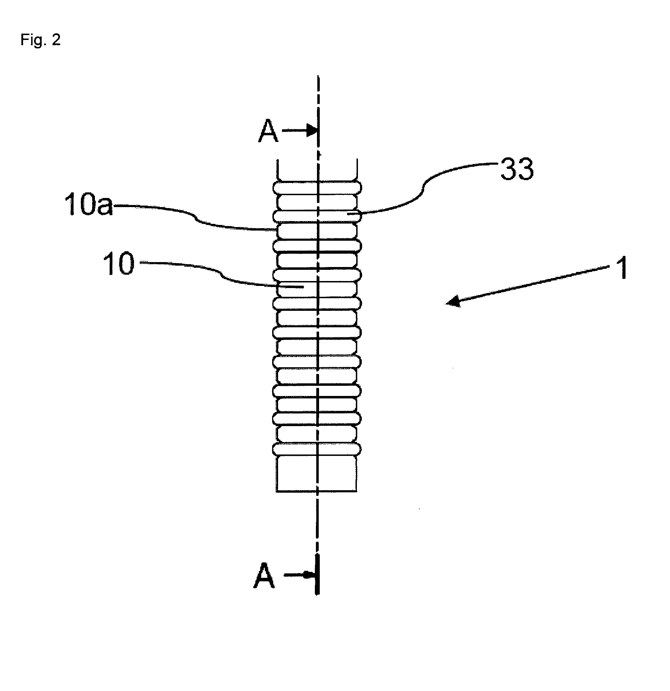

Fig. 1 shows in conjunction with Fig. 2 a valve 1 according to the present invention. The valve 1 is configured for discharging a gas G, e.g. oxygen, into a liquid medium L, such as e.g. water, and for preventing a back-flow of said liquid L into the valve 1.

As shown in Figs. 1 to 2, the valve 1 comprises a valve body 10 having an outside 10a and defining a preferably cylindrical channel 40 of the valve 1. The valve body 10 as well as the channel 40 extend along a longitudinal axis z of the valve body 10.

For passing gas G into the channel 40 of the valve 1, the valve body 10 comprises at least one inlet 21 that is in flow connection with the channel 40.

According to the invention, the valve 1 is configured to prevent a back-flow of the liquid L into the valve 1.

For this, the valve body 10 comprises at least one, preferably a plurality of circumferential grooves 32 on the outside 10a of the valve body 10, which grooves 32 extend parallel with respect to each other around the longitudinal axis z in a peripheral direction of the second section 30, respectively.

As shown in Fig. 1 a plurality of outlets 31 is arranged in each groove 32, which outlets 31 are each in flow connection with the the channel 40 of the valve 1. In order to close the outlets 31 in each annular groove 32, the valve 1 comprises an annular sealing 33 arranged in each groove 32 which preferably sits in the respective groove 32 in a form-fitting manner and thus closes the respective outlets 31 when the channel 40 is not pressurized to a certain degree with the gas G. Once gas G is passed via the inlet 21 into the channel 40 of the valve 1 and the pressure of the gas G inside the cannel 40 exceeds a certain threshold pressure, the elastically deformable sealings 33 are lifted away from the outlets 31 in a radial direction of the second section 30 due to the gas pressure so that gas G can escape through the outlets 31 from the channel 40 and is thus discharged from the valve 1.

In case the channel 40 of the valve 1 is not pressurized, each sealing 33 again tightly butts in the respective groove 32 against the outside 10a of the the valve body 10 such that the outlets 31 are completely covered by the associated sealings 33 which thus prevent back-flow of the liquid L into the valve 1 when the latter is not pressurized.

To summarize, the valve 1 according to the invention only needs a reduced maintenance due to its effective and simple working principle. Further, due to its ability of preventing back-flow of liquid L into the valve 1, the valve 1 can be placed directly into the liquid L (e.g. under water). Furthermore, advantageously, apart from the elastically deformable sealings (e.g. O-rings) 33, the valve 1 according to the invention does not require any movable mechanical parts. Furthermore, the valve 1 according to the invention can be tailored to different flow rates and operating pressures. The valve 1 according to the invention further improves safety for upstream components (e.g. no back-flow of e.g. organic matter in oxygen supply lines). Finally, the valve 1 according to the invention can be installed close to or even at the location of a gas injection into the liquid L.

**Reference Numerals**

| | |
|---|---|
| 1 | Valve |
| 10 | valve body |
| 10a | Outside |
| 21 | Inlet |
| 31 | Outlet |
| 32 | Groove |
| 33 | Sealing |
| 40 | Channel |
| G | gas (e.g. oxygen) |
| L | liquid (e.g. water) |
| Z | longitudinal axis |

## Claims

1. Valve (1) for discharging a gas (G) and for preventing a back-flow of a liquid (L) into the valve (1), wherein the valve (1) comprises:
- a valve body (10) surrounding a channel (40) of the valve (1), wherein the valve body (10) further comprises at least one inlet (21) for passing gas (G) into said channel (40) and an outlet (31) for discharging said gas out of the valve (1),
**characterized in that**
the valve body (10) comprises a circumferential groove (32) on an outside (10a) of the valve body (10), wherein said outlet (31) is arranged in said groove (32), and wherein the valve (1) comprises an elastically deformable annular sealing (33) that is arranged in said groove (32) such that when gas (G) is passed through said at least one inlet (21) into said channel (40) and the pressure of the gas (G) inside said channel (40) exceeds a threshold, the sealing (33) is pushed away from said outlet (31) by said gas (G) so that said gas (G) is discharged through said outlet (31) out of the valve (1) and such that when said pressure is below said threshold said sealing (33) closes said outlet (31) so that liquid (L) cannot flow back through said outlet (31) into the valve (1).

2. Valve according to claim 1, **characterized in that** the valve body (10) comprises a plurality of circumferential grooves (32) on said outside (10a) of the valve body (10) as well as a plurality of outlets (31), wherein at least one outlet (31) is arranged in each groove (32), and wherein the valve (1) comprises a plurality of elastically deformable annular sealings (33), wherein each sealing (33) is arranged in an associated groove (32) such that when gas (G) is passed through said at least one inlet (21) into said channel (40) and the pressure of the gas (G) inside said channel (40) exceeds said threshold each sealing (33) is pushed away from the respective at least one outlet (31) by said gas (G) so that said gas (G) is discharged through said outlets (31) out of the valve (1) and such that when said pressure is below said threshold said sealings (33) close said outlets (31) so that liquid (L) cannot flow back through said outlets (31) into the valve (1).

3. Valve according to one of the preceding claims, **characterized in that** said channel (40) extends along a longitudinal axis (z) of the valve body (10).

4. Valve according to claim 3, **characterized in that** the grooves (32) and/or sealings (33) are coaxially arranged with respect to the longitudinal axis (z).

5. Use of a valve (1) according to one of the preceding claims as an injection device for injecting a gas (G) directly into a liquid (L).

6. Use according to claim 5, wherein said gas is one of: O₂, N₂, or CO₂

7. Use according to claim 5 or 6, wherein said liquid is water or comprises water.
